# EUROPEAN PATENT APPLICATION

(11) **EP 4 797 690 A1**
(43) Date of publication of application: **26.08.2026**
(21) Application number: 25159853.8
(22) Date of filing: 25.02.2025
(51) Int. Cl.: H04N 19/132, H04N 19/137, H04N 19/187, H04N 19/33, H04N 19/59

(54) **ENCODING A VIDEO SEQUENCE INTO A HIERARCHICALLY ENCODED VIDEO STREAM WITH A TARGET RESOLUTION**

(71) Applicant: Axis AB, 223 69 Lund (SE)
(72) Inventor: Edpalm, Viktor, 223 69 LUND (SE); Keskikangas, Axel, 223 69 Lund (SE)
(74) Representative: AWA Sweden AB

(57) **Abstract**

This disclosure relates to a method (500), software and device for encoding a video sequence into an encoded video stream having a target resolution, comprising: encoding (S502) a first image frame of the video sequence using the base layer to encode the image frame in a first resolution being lower than the target resolution, and using the enhancement layer to encode at least a portion of image data of the first image frame to reach the target resolution; detecting (S504) an encoding scenario from a set of one or more predefined encoding scenarios; and encoding (S506) a second image frame of the video sequence using the base layer to encode the second image frame in the target resolution, and indicating in the encoded video stream that the second image frame is decodable in the target resolution using only the base layer.

## Description

### Technical Field

The present disclosure relates to hierarchical video coding and in particular to a method, device and non-transitory computer-readable storage medium for providing encoded video having a target resolution.

### Background

Hierarchical video coding has enhanced the efficiency and flexibility of video streaming technologies. Techniques such as Low Complexity Enhancement Video Coding (LCEVC) or other similar codecs encode video data across multiple layers, enabling the delivery of content at varying resolutions from a single encoded source. This approach begins with a base layer, which contains a lower-resolution version of the video, and builds upon it with one or more enhancement layers that add the necessary details to reconstruct the video at higher resolutions. This scalable structure is particularly beneficial for adaptive streaming technologies, as it allows for seamless adjustments to different network conditions and device capabilities, ensuring optimized video delivery.

A challenge within hierarchical coding is that the enhancement layer in LCEVC is encoded without using motion vectors, relying solely on transform-based coding to represent the residual differences between the base layer and the original content. While this design reduces computational complexity, it can lead to inefficiencies in certain scenarios where significant temporal redundancy exists across frames. Without motion compensation, large residuals may be generated, particularly in cases of high-motion scenes or rapidly changing content, leading to increased enhancement layer bandwidth.

There is thus a need for improvements in this context.

### Summary

In view of the above, solving or at least reducing one or several of the drawbacks discussed above would be beneficial, as set forth in the attached independent patent claims.

According to a first aspect of the present disclosure, there is provided a method for encoding a video sequence into an encoded video stream having a target resolution, wherein the encoded video stream comprises an enhancement layer and a base layer, the method comprising: encoding a first image frame of the video sequence using the base layer to encode the image frame in a first resolution being lower than the target resolution, and using the enhancement layer to encode at least a portion of image data of the first image frame to reach the target resolution; detecting an encoding scenario from a set of one or more predefined encoding scenarios; and encoding a second image frame of the video sequence, the second image frame being subsequent to the first image frame in the video sequence, using the base layer to encode the second image frame in the target resolution, and indicating in the encoded video stream that the second image frame is decodable in the target resolution using only the base layer.

Hierarchical video coding generates a multi-resolution encoded video stream by using a base layer and one or more enhancement layers. The base layer encodes an image frame at a resolution lower than the target resolution, while the enhancement layer encodes additional data that refines the decoded image, allowing the decoded video stream to achieve the target resolution. The enhancement layer thus encodes the residual difference between the image data of the original image frame and the lower-resolution image data encoded in the base layer, with the residual being encoded at the target resolution.

This approach offers several advantages, including a generally lower average bitrate due to the efficient separation of base and enhancement data. However, in certain encoding scenarios, such as scenes with high motion, LCEVC may encounter inefficiencies, resulting in a higher overall bitrate compared to encoding the video using only the base encoder.

By the term "encoding scenario", in the context of the present specification, is meant a specific combination of video content characteristics and encoding conditions that can lead to inefficiencies in LCEVC. Such scenarios may arise, for example, in video sequences with fast or erratic motion, rapid scene changes, complex textures, or high spatial detail, where the enhancement layer residuals become large, thereby increasing the overall bitrate beyond what the base encoder alone would require of encoding the video sequence in the target resolution directly.

The inventors have realized that these encoding scenarios, which are predefined, can be detected in the video stream. When this happens, the encoding method can dynamically adjust how subsequent image frames (i.e., the second image frame) are processed to improve overall efficiency. Specifically, upon detecting an encoding scenario where the enhancement layer may lead to a higher overall bitrate, the system can switch to encoding the subsequent frames directly in the target resolution using only the base layer. By doing so, the enhancement layer is bypassed for the second image frame, reducing the overall bitrate while facilitating a maintained quality of the encoded video stream.

Advantageously, this approach allows for a more adaptive encoding process, wherein the enhancement layer is selectively utilized only when deemed advantageous, thereby mitigating bandwidth overhead which otherwise may occur in these predefined encoding scenarios. Moreover, the indication within the encoded video stream that the second frame is fully decodable using only the base layer ensures that decoders can seamlessly handle this optimization without additional complexity.

In some examples, a first encoding scenario of the one or more predefined encoding scenarios comprises a continuous shaking of a camera capturing the video sequence. Continuous camera shake occurs when the position or orientation of the camera is constantly shifting, for example due to handheld operation, unstable mounting, or environmental factors like wind or vibrations. This movement causes frequent and irregular changes in the captured video frames. As a result, corresponding frequent and irregular changes in the captured video frames may occur, often resulting in large residuals between consecutive frames when compared to a stable scene. Consequently, the encoder may struggle to efficiently compress the residuals in the enhancement layer, leading to an inflated bitrate.

In some examples, detecting an encoding scenario comprises detecting the first encoding scenario by: receiving sensor data from a gyro of the camera, and determining that the camera is shaking based on an analysis of the sensor data. Advantageously, detecting camera shake using gyro sensor data may allow for accurate and early detection. Gyro sensors may provide real-time motion feedback directly from the camera hardware which enables the encoder to quickly identify the first encoding scenario, thereby allowing the encoding process to adapt immediately to avoid inefficient enhancement layer encoding. Additionally, because the detection is based on physical sensor readings rather than image analysis, this example may be less prone to false positives from other sources of visual motion, such as objects moving within the scene, which may improve the overall reliability of the detection process.

In some examples, detecting an encoding scenario comprises detecting the first encoding scenario by: analysing motion vectors of the base layer of the encoded first image frame, and determining that the camera is shaking by determining that the motion vectors correspond to a uniform motion of image data of the first image frame compared to image data of a reference encoded image frame used when encoding the first image frame.

Uniform motion, as used herein, refers to a situation where a majority (e.g., exceeding 50% such as 75%, 85%, 90%, etc.,) of the motion vectors within an image frame point in the same direction and with similar magnitude. This indicates that the entire frame is moving consistently, typically due to external factors like camera shake or panning. However, localized object motion within the captured scene may result in some motion vectors deviating from the general pattern, but as long as the dominant motion vectors remain consistent across large regions of the frame, it may be classified as uniform motion.

An advantage of detecting camera shakes by analysing the motion vectors of the base layer is that it leverages already available encoding data, which may eliminate the need for additional sensors or hardware. This may make the detection method efficient and allow for easy integration into existing encoding workflows.

In some examples, a second encoding scenario of the one or more predefined encoding scenarios comprises a ratio of the bitrate of the enhancement layer to the bitrate of the base layer exceeding a threshold ratio or the bitrate of the enhancement layer exceeding a threshold value, wherein detecting the second encoding scenario comprises monitoring the bitrate of the enhancement layer of the encoded first image frame.

In this example, detecting an encoding scenario comprises detecting the second encoding scenario by monitoring the bitrate of the enhancement layer, and in some cases compare that with the bitrate of the base layer. This may allow the system to detect inefficiencies caused by an increase in the bitrate of the enhancement layer, either relative to the base layer or as an absolute increase beyond a threshold, thereby providing a reduced computational complexity of the monitoring of the efficiency of the enhancement layer encoding.

In some examples, the portion of image data of the first image frame depicting a region of interest in a scene depicted by the video sequence, wherein a third encoding scenario of the one or more predefined encoding scenarios comprises a persistent motion being present in the region of interest in the scene, wherein detecting an encoding scenario comprises detecting the third encoding scenario by: analysing motion vectors of the base layer of a plurality of encoded image frames preceding the second encoded image frame in the encoded video stream, and determining that the persistent motion being present in the region of interest in the scene based on the analysis.

By the term "region of interest" (RoI), in the context of the present specification, is meant a specific portion of the image frame that is either user-defined or automatically identified based on its high level of visual detail or importance within the scene. The RoI may thus correspond to areas containing fine textures, important objects, or content specified by the application or user to receive higher encoding fidelity.

By the term " persistent motion", in the context of the present specification, is meant ongoing movement of image content across a sequence of frames, as indicated by motion vectors consistently showing movement within a region of interest over time. This persistent motion does not require motion to be in a single direction but may involve oscillating movement, irregular but sustained motion, or repeated scene activity. Such motion may result from factors such as moving objects, camera panning, or dynamic regions within a scene.

In cases where persistent motion occurs in high-resolution details of the image frame, the base layer may fail to capture much or any of this motion, as it is encoded at a lower resolution. This leads to larger residuals in the enhancement layer, making it difficult to compress efficiently, particularly since the enhancement layer does not use motion vectors (as discussed above)By switching to a higher-resolution base layer and bypassing the enhancement layer when the third encoding scenario is detected, bandwidth overhead may be reduced.

In some examples, encoding the second image frame of the video sequence comprises encoding the base layer of the second image frame as a key frame having the target resolution. By inserting a new key frame having the target resolution, this example resets the prediction chain and provides a fully self-contained frame that does not rely on previous frames for decoding. This allows the enhancement layer to be bypassed while ensuring that standard decoder functionality can be used to decode the base layer at the target resolution without additional complexity.

In some examples, encoding the second image frame of the video sequence comprises encoding the base layer of the second image frame as a switch frame having the target resolution. A switch frame is a type of inter-frame that does not require the reference image frame to have the same resolution as the image frame being encoded. This enables smooth switching between a lower-resolution base layer and a higher-resolution base layer, while still retaining efficient compression by referencing a previous encoded image frame (such as the encoded first image frame).

In some examples, indicating in the encoded video stream that the second image frame is decodable in the target resolution using only the base layer comprises at least one of: encoding an enhancement layer of the second image frame with no image data; indicating in metadata of the encoded image stream that the second image frame is decodable in the target resolution using only the base layer; and encoding the base layer of the second image frame as a switch frame. For example, the metadata of the encoded video stream may include information about the available resolutions (the first resolution and the target resolution), allowing the decoder to easily determine whether decoding the enhancement layer for the second image frame is necessary or if the base layer alone is sufficient to achieve the target resolution for a given image frame. In another example, the decoder may proceed to decode the enhancement layer as usual, but since the enhancement layer contains no image data, the process will be completed rapidly without adding any additional data to the decoded second image frame. Alternatively, the decoder may be configured to recognize that when the base layer of the second image frame is encoded as a switch frame with an increased resolution compared to the base layer of the first image frame, the enhancement layer is not required for decoding the second image frame.

In some examples, the method further comprises continuously encoding a plurality of image frames subsequent to the second image frame in the video stream using the base layer to encode each of the plurality of image frames in the target resolution. This means that the enhancement layer is bypassed for an extended period, reducing the need for frequent switching between encoding modes. Advantageously, by prioritizing long-term stability over frequent mode switching, this example may effectively balance power efficiency, bitrate optimization, and video quality across various encoding scenarios.

In some examples, the method further comprises: determining that a count of the plurality of image frames exceeds a threshold count; detecting that none of the encoding scenarios of the set of one or more predefined encoding scenarios is occurring; and encoding a current image frame of the video sequence using the base layer to encode the current image frame in the first resolution, and using the enhancement layer to encode at least a portion of image data the current image frame to reach the target resolution. The checking for encoding scenarios, such as camera shake or persistent motion, can be performed either continuously during the time span (e.g., over 5 to 10 seconds) corresponding to the threshold, or after the threshold count of frames has been exceeded. Continuous checking involves analysing e.g., gyro data or motion vectors frame by frame in real time, providing a larger sample of data, which can make the decision at the threshold count of image frames more stable and provide a more reliable decision by filtering out short-term fluctuations. Alternatively, checking after the threshold number of image frames have been encoded at the target bitrate using the base layer only saves computational power by taking a one-time decision based on data collected at the threshold.

In some examples, the first image frame is encoded using the Low Complexity Enhancement Video Coding, LCEVC, coding standard. Consequently, a standard compliant LCEVC decoder can be used to decode the first image frame.

In some examples, the base layer of each of the first and second image frames is encoded using one of the following coding standards: AV1, AV2, and VP9. These coding standards are examples of coding standards implementing switch frames and/or varying resolutions in I-frames in a stream.

According to a second aspect of the disclosure, the above object is achieved by a non-transitory computer-readable storage medium having stored thereon instructions for implementing the method according to the first aspect when executed on a device having processing capabilities.

According to a third aspect of the disclosure, the above object is achieved by a device for encoding a video sequence into an encoded video stream having a target resolution, wherein the encoded video stream comprises an enhancement layer and a base layer, wherein the device is configured for: encoding a first image frame of the video sequence using the base layer to encode the image frame in a first resolution being lower than the target resolution, and using the enhancement layer to encode at least a portion of image data the first image frame to reach the target resolution; detecting a first encoding scenario from a set of one or more predefined encoding scenarios; and encoding a second image frame of the video sequence, the second image frame being subsequent to the first image frame in the video sequence, using the base layer to encode the second image frame in the target resolution, and indicating in the encoded video stream that the second image frame is decodable in the target resolution using only the base layer.

The second and third aspects may generally have the same features and advantages as the first aspect. It is further noted that the disclosure relates to all possible combinations of features unless explicitly stated otherwise.

### Brief Description of the Drawings

The above, as well as additional objects, features, and advantages of the present disclosure, will be better understood through the following illustrative and non-limiting detailed description of embodiments of the present disclosure, with reference to the appended drawings, where the same reference numerals will be used for similar elements, wherein:
Figure 1 shows a system for encoding a video sequence into an encoded video stream having a target resolution, according to embodiments;
Figure 2 shows functionality of a device for encoding a video sequence into an encoded video stream having a target resolution, according to embodiments;
Figure 3 shows an encoded video stream, according to a first embodiment;
Figure 4 shows an encoded video stream, according to a second embodiment;
Figure 5 shows a flow chart of a method for encoding a video sequence into an encoded video stream having a target resolution, according to embodiments.

### Detailed Description

Efficient video encoding is essential for delivering high-quality content while minimizing bitrate and computational overhead. Hierarchical video coding techniques, such as Low Complexity Enhancement Video Coding (LCEVC), utilize a base layer and an enhancement layer to encode video at multiple resolutions, enabling scalability and adaptability to varying network conditions. However, certain encoding scenarios can lead to inefficiencies, where the enhancement layer consumes excessive bitrate.

The present disclosure addresses this challenge by introducing a method that dynamically adjusts the encoding process based on detected encoding scenarios. Specifically, using techniques described herein, predefined encoding conditions, such as camera shake, excessive enhancement layer bitrate, or persistent motion in a region of interest, is monitored, and encoding is adapted accordingly. When such an encoding scenario is detected, a system/device implementing the techniques switches to encoding subsequent frames at the target resolution using only the base layer, thus bypassing the need of the enhancement layer to reach the target resolution. This approach may optimize bitrate allocation, reduces computational complexity, and enhances overall encoding efficiency.

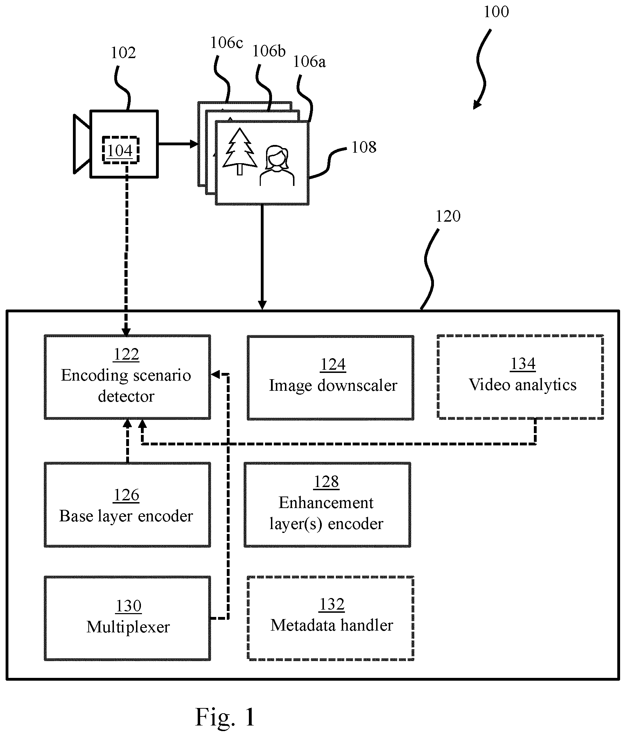

Figure 1 shows by way of example a system 100 comprising a video camera 102. The video camera 102 captures image frames 106a-c, depicting a scene. The system 100 comprises an encoding device 120 configured to for encoding a received video sequence 106 into an encoded video stream 150 having a target resolution. The encoding device 120 implements a hierarchical encoding scheme that encodes the video sequence using a base layer at a lower resolution and an enhancement layer that provides additional data to reconstruct the video at the target resolution. The encoded video stream 150 thus comprises an enhancement layer and a base layer, allowing for scalable video encoding that can dynamically adapt based on predefined encoding scenarios. The enhancement layer and the base layer may be multiplexed, using a multiplexer 130, into a single encoded video stream 150.

The encoding device 120 processes the first image frame 106a by first encoding it into the base layer (e.g., using a base layer encoder 126) at a first resolution, which is lower than the target resolution. This involves standard compression techniques such as motion estimation and compensation, transform coding, quantization, and entropy coding to efficiently represent the image frame 106a at the lower resolution. The base layer can be encoded by the base layer encoder 126 using AV1, AV2, VP9, or other suitable video codecs, ensuring compatibility with widely used video compression standards.

Once the base layer is encoded, the encoding device 120 determines the residual information, which represents the difference between the original image frame 106a and the upscaled version of the base layer. Unlike the base layer, which may use motion vectors for inter-frame prediction, the encoding of the enhancement layer (using an enhancement layer(s) encoder 128) does not use motion vectors. Instead, the enhancement layer only encodes spatial residuals, meaning it does not explicitly track or compensate for motion between frames. The enhancement layer data may thus be derived from transform coding of the residual signal, which captures additional high-frequency details to refine the later decoded frame at the target resolution.

However, not necessarily the entire residual signal is encoded in the enhancement layer. Instead, the enhancement layer encodes at least a portion 108 of the image frame, ensuring that the frame can still be decoded at the target resolution. This allows for flexibility in encoding strategies, where residual data may be selectively encoded based on perceptual importance, bitrate constraints, or a user defined region of interest (RoI). The portion of the image frame that is encoded in the enhancement layer may thus, in some embodiments, correspond to the RoI, which may be automatically determined based on scene analysis (e.g., by a video analytics component 134 of the encoding device 120) or manually defined by a user. Such a RoI may allow for prioritization of specific areas of the image, such as faces, text, or other highly detailed regions, ensuring that these areas receive higher quality enhancement while maintaining overall bitrate efficiency.

In examples, the encoding device 120 encodes the first image frame 106a using the Low Complexity Enhancement Video Coding (LCEVC) standard. LCEVC supports multiple enhancement layers, denoted as L1, L2, etc., which progressively refine the reconstructed image. In some examples, two enhancement layers (L1, L2) are implemented. The first enhancement layer (L1) operates at an intermediate resolution, typically halfway between the base layer and the target resolution, encoding additional details that improve sharpness and texture. The second enhancement layer (L2) operates at the target resolution, refining the decoded image by adding fine-grained details and high-frequency components that enhance visual fidelity. In some embodiments, the first resolution is ¼ of the target resolution. The downscaling of the first image frame 106a may be implemented in an image down scaler component 124.

In this disclosure, the hierarchal encoding will be described using only the L2 enhancement layer for clarity and conciseness. However, the described techniques can equally be applied to a plurality of enhancement layers, such as using both L1 and L2, or additional enhancement layers if needed. The techniques described herein remains applicable regardless of the number of enhancement layers used, ensuring flexibility in different encoding configurations.

The encoding device 120 further comprises an encoding scenario detector 122. The encoding scenario detector 122 is configured for detecting an encoding scenario from a set of one or more predefined encoding scenarios. In figure 1, the dashed arrows represent data sets and their sources, which the encoding scenario detector 122 may utilize to determine whether the current encoding scenario matches one of the predefined encoding scenario(s).

These predefined encoding scenarios correspond to situations where encoding the enhancement layer residuals becomes inefficient, meaning that the enhancement layer will require a disproportionately high bitrate. Such scenarios typically arise when the residuals between the base layer and the image frames of the video sequence 106 become highly unpredictable, large, or rapidly changing, making them difficult to compress efficiently.

One such encoding scenario comprises a continuous shaking of the camera 102 capturing the video sequence 106. When the camera 102 is continuously shaking, the residuals shift unpredictably between frames, making them costly to encode. In one example, the encoding scenario detector 122 detects such encoding scenario by receiving sensor data from a gyro 104 of the camera 102 and determining that the camera 102 is shaking based on an analysis of the sensor data. The gyro data provides real-time measurements of the motion of the camera 102, allowing the system to detect continuous or erratic movement that could lead to inefficient residual encoding.

In other examples, the encoding scenario detector 122 detects the camera shaking scenario by analysing the motion vectors of the base layer of the encoded first image frame. These motion vectors may be provided by the base layer encoder 126 and represent the displacement of image data between frames.

By analysing the motion vectors, the encoding scenario detector 122 can determine whether the camera 102 is shaking by detecting uniform motion across the entire image. Specifically, if the motion vectors indicate that all or most regions of the image frame 106a are moving in the same direction and with similar magnitude, this suggests global motion, such as camera shake or panning. This differs from localized object motion, where motion vectors typically vary in direction and scale across the frame.

In some examples, a second encoding scenario of the one or more predefined encoding scenarios comprises a ratio of the bitrate of the enhancement layer to the bitrate of the base layer exceeding a threshold ratio or the bitrate of the enhancement layer exceeding a threshold value. The encoding scenario detector 122 may perform this analysis using bitrate data provided by the multiplexer 130, which monitors the encoded bitrate of the enhancement layer for each frame. By comparing the enhancement layer's bitrate to that of the base layer, or to an absolute threshold, the encoding scenario detector 122 can determine whether excessive enhancement layer usage is occurring. The absolute threshold may vary depending on the overall bit rate of the encoded video stream 150, or be a fixed number.

In some examples, the portion of the image data encoded by the enhancement layer depicts a RoI 108 in a scene depicted in the video sequence 106. In such a scenario, a third encoding scenario of the one or more predefined encoding scenarios comprises a persistent motion being present in the region of interest in the scene. In these examples, detecting an encoding scenario by the encoding scenario detector 122 comprises detecting the third encoding scenario by analysing motion vectors of the base layer of a plurality of encoded image frames preceding the second encoded image frame in the encoded video stream, and determining that the persistent motion being present in the region of interest in the scene based on the analysis. This could occur, for example, when a pendulum is swinging in a high-detail region of the frame or a moving vehicle or an athlete remains within the (user defined or automatically defined) region of interest.

It should be noted that the set of predefined encoding scenarios is not limited to those explicitly described above but can be customized based on application requirements or use cases. It is up to the implementer or the specific context to define which encoding scenarios are relevant, such as dynamic lighting changes, sudden scene transitions, etc.

It should be noted that the division of functionality and components as described conjunction with figure 1, including the arrangement of the encoding device 120, video camera 102, multiplexer 130, and other processing components, is provided by way of example only. The described system architecture represents one possible implementation, and the techniques described herein is not limited to this specific structure.

In some implementations, various components may be integrated into a single device, such as a dedicated encoder within the camera 102. In other examples, the functionality may be distributed across multiple devices or servers. For instance, the base layer encoding and enhancement layer encoding may be performed on different hardware units or across cloud-based processing resources. Similarly, the encoding scenario detector 122 may operate locally within the encoding device 120 or be executed on a remote server that analyses streaming data before making adaptive encoding decisions

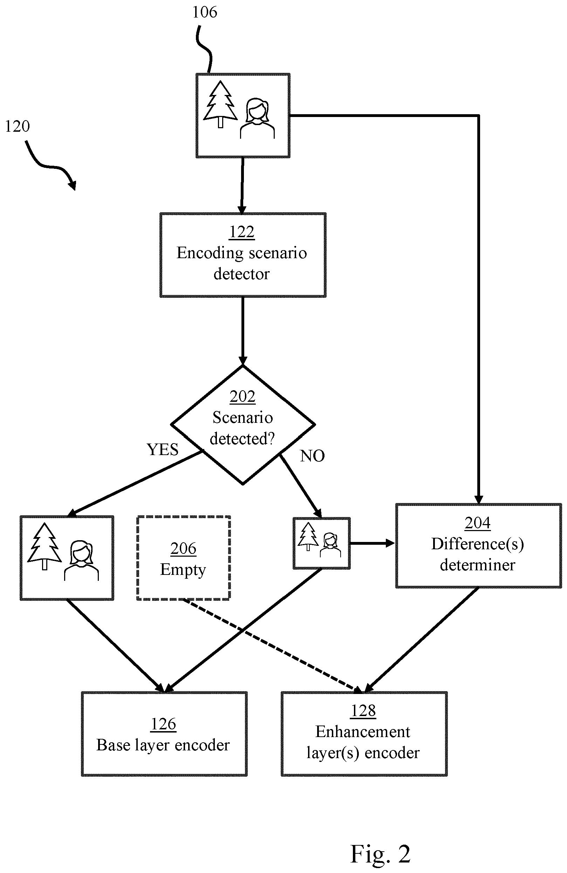

When a scenario is detected, the encoding device 120 is configured for encoding a second, subsequent, image frame 106b of the video sequence using the base layer to encode the second image frame in the target resolution, and indicating (using e.g., a metadata handler 132 or in other ways further explained below) in the encoded video stream 150 that the second image frame 106b is decodable in the target resolution using only the base layer. This will now be further described in conjunction with figure 2.

Figure 2 shows, by way of example, functionality of the encoding device 120. As described above, the encoding device 120 receives an image frame 106. When receiving the image frame 106, or before it is received, the encoding scenario detector 122 determines whether an encoding scenario from the set of one or more predefined encoding scenarios is detected. If no such scenario is detected 202, the encoding device 120 proceeds with normal hierarchical encoding techniques.

As discussed above, under normal hierarchical encoding, the image frame 106 is downscaled to the first resolution (and one or more intermediate resolutions as discussed above) and encoded as a base layer by the base layer encoder 126. To reconstruct the image at the target resolution, the encoding device 120 determines one or more residuals (or differences) between an upscaled version of the downscaled image frame and the original image frame 106 as also described above. This process is performed by a difference determiner component 204, which computes the differences that need to be encoded to restore lost details.

The computed residuals are then encoded into one or more enhancement layers by the enhancement layer(s) encoder 128, ensuring that the final reconstructed image matches the target resolution.

If an encoding scenario is detected 202, the image frame is not down scaled. Instead, the base layer encoder 126 encodes the image frame 106 directly at the target resolution, ensuring that the full-resolution frame can be decoded using only the base layer. In some examples, when an enhancement layer is not needed, the enhancement layer of the image frame 106 may be encoded using an empty data structure 206, such as an enhancement layer image frame containing no or minimal image data. An empty enhancement layer serves as a signal to the decoder that no additional enhancement information is required for this frame. This may be achieved by inserting a placeholder frame 206 with minimal metadata to maintain stream continuity. In other examples, the encoding device 120 skips encoding the enhancement layer for the image frame 106. In these cases, a decoding device is configured to recognize from the metadata in the received encoded video stream that the enhancement layer is absent or not required for decoding. This may be achieved by including an explicit flag, marker, or metadata field within the encoded stream (e.g. using the metadata handler 132), indicating to the decoder that the base layer alone is sufficient to reconstruct the image at the target resolution.

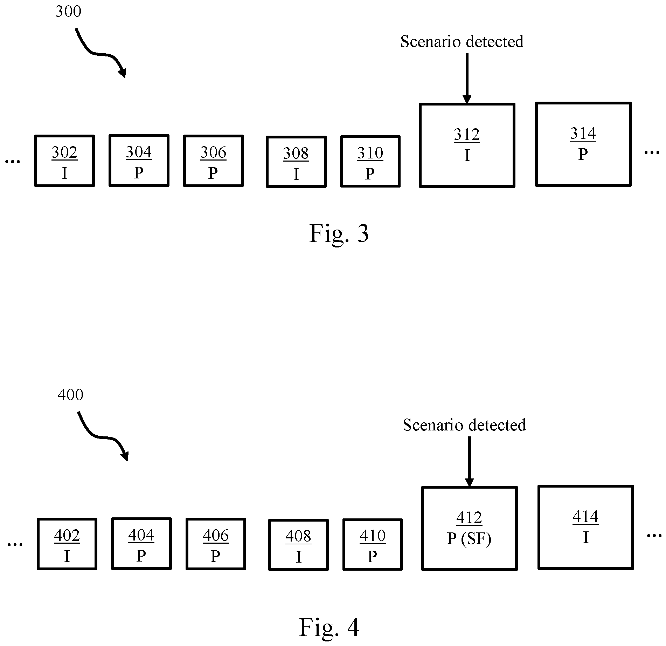

Figures 3 and 4 each illustrate an example of an encoded video stream 300, 400, corresponding to the base layer of a plurality of image frames from encoded video stream 150 shown in Figure 1. As mentioned above, the base layers of multiple image frames may be encoded using temporal prediction techniques, where inter-frame dependencies are leveraged to improve compression efficiency. In these examples, the group of pictures (GOP) structure of the encoded video stream 300, 400 is set to 3, meaning that each I-frame (intra-coded frame) is followed by two P-frames (predictive-coded frames) before the next I-frame appears. This GOP structure is provided as an example only, and the method is not limited to a specific GOP length, any GOP structure may be applied depending on the encoding configuration, bitrate constraints, or application requirements. Additionally, B-frames (bi-directionally predicted frames) may also be used within the GOP structure.

In the example of Figure 3, an encoding scenario is detected at a point where the next image frame 312 in the encoded video stream 300 (including encoded image frames 302 - 314) would normally be encoded as a P-frame. However, in some examples, as shown in Figure 3, when an encoding scenario is detected, the base layer of the next encoded image frame 312 is instead encoded as a key frame (I-frame) at the target resolution. This approach ensures that the prediction chain is reset (meaning that the next encoded image frame is encoded as a P-frame referencing the key frame encoded image frame 312), allowing subsequent frames to be encoded without reliance on previous frames (e.g., image frames 308, 310) encoded at the first, lower, resolution.

Figure 4 shows by way of example another implementation of image frame encoding when the scenario is detected. In this example, when the scenario is detected, the next encoded image frame 412 is encoded as a switch frame (SF) having the target resolution. A switch frame is a type of predictive (P) frame that allows for a smooth transition between different encoding configurations, such as switching from a lower-resolution (the first resolution) image data used in the preceding image frames 402-410 to a higher-resolution (target resolution) image data used in the encoded image frame 412. Unlike using a key frame 312 as exemplified in figure 3, which is fully independent and does not reference previous frames, a switch frame 412 can still utilize motion prediction from reference frames (e.g., image frames 410, 408), reducing bitrate while ensuring that the transition to the new resolution (target resolution) is efficient.

Such a switch frame 412 (where the resolution of the image data of the SF 412 is increased compared to the resolution of the image data 410 of the reference frame 410) may indicate to the decoder that the image frame 412 is decodable in the target resolution using only the base layer.

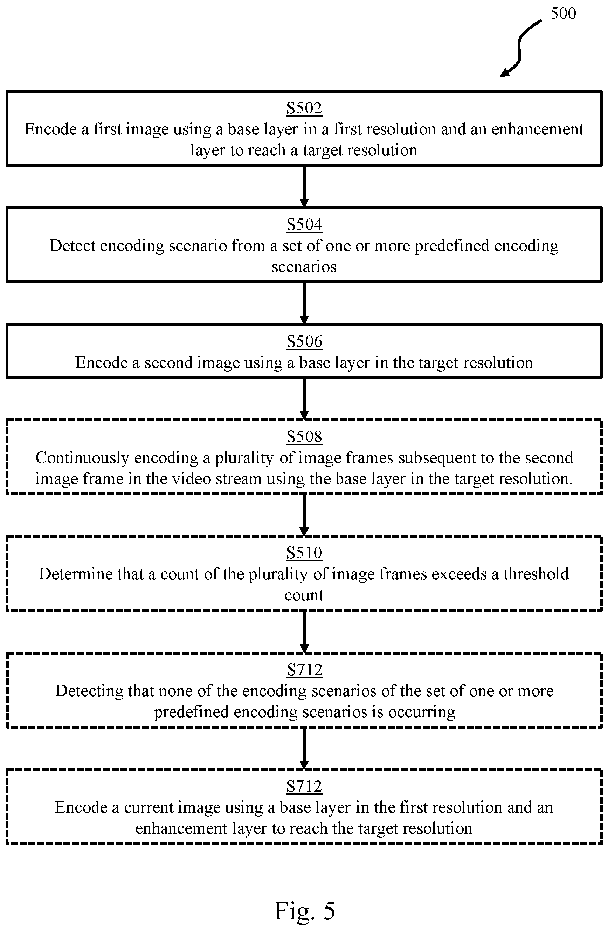

Figure 5 shows by way of example a flow chart of a method 500 for encoding a video sequence into an encoded video stream having a target resolution. The method 500 comprises the steps of:
- Encoding (S502) a first image frame of the video sequence using the base layer to encode the image frame in a first resolution being lower than the target resolution, and using the enhancement layer to encode at least a portion of image data of the first image frame to reach the target resolution;
- Detecting (S504) an encoding scenario from a set of one or more predefined encoding scenarios; and
- Encoding (S506) a second image frame of the video sequence, the second image frame being subsequent to the first image frame in the video sequence, using the base layer to encode the second image frame in the target resolution, and indicating in the encoded video stream that the second image frame is decodable in the target resolution using only the base layer.

The method 500 in figure 5 comprises some further steps S508-S514 which may be implemented in some examples.

In some examples, the method 500 comprises continuously encoding S508 a plurality of image frames subsequent to the second image frame in the video stream using the base layer to encode each of the plurality of image frames in the target resolution. This means that, after an encoding scenario is detected and the encoding mode is switched, the base layer continues to be encoded at the target resolution for multiple subsequent frames. The method 500 may further comprise determining S510 whether the count of the plurality of image frames encoded at the target resolution using only the base layer exceeds a threshold count. This threshold count may, for example, correspond to at least 3, 5, 9, etc., seconds of video stream duration.

Once this condition is met, the method 500 may then analyse the video stream again to determine whether the encoding scenario that initially triggered the switch is still occurring or if any other encoding scenario from the set of predefined encoding scenarios is now present. If no encoding scenario is detected S512, the method may transition back S514 to normal hierarchical encoding with an enhancement layer. However, if an encoding scenario of the predefined encoding scenarios is still detected, the base-layer-only encoding mode may be maintained for additional frames. Consequently, the method 500 may comprise detecting S512 that none of the encoding scenarios of the set of one or more predefined encoding scenarios is occurring; and encoding S514 a current image frame of the video sequence using the base layer to encode the current image frame in the first resolution, and using the enhancement layer to encode at least a portion of image data the current image frame to reach the target resolution.

The method described in Figure 5, as well as any other techniques described herein, may be implemented using a non-transitory computer-readable storage medium storing instructions that, when executed on a device with one or more processors, cause the device to perform the described encoding processes.

The device may utilize one or more processors, such as a central processing unit (CPU), graphics processing unit (GPU), digital signal processor (DSP), field-programmable gate array (FPGA), application-specific integrated circuit (ASIC), or any combination thereof. These processors may be part of a dedicated video encoding system, a general-purpose computing device, a cloud-based processing platform, or an embedded system within a camera or other video processing hardware.

The non-transitory computer-readable storage medium may include, but is not limited to, flash memory, solid-state drives (SSD), read-only memory (ROM), random-access memory (RAM), magnetic storage, or any other suitable storage medium capable of storing executable instructions.

The above embodiments are to be understood as illustrative examples of the disclosure. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the disclosure, which is defined in the accompanying claims.

## Claims

1. A method for encoding a video sequence into an encoded video stream having a target resolution, wherein the encoded video stream comprises an enhancement layer and a base layer, the method comprising:
encoding a first image frame of the video sequence using the base layer to encode the image frame in a first resolution being lower than the target resolution, and using the enhancement layer to encode at least a portion of image data of the first image frame to reach the target resolution;
detecting an encoding scenario from a set of one or more predefined encoding scenarios; and
encoding a second image frame of the video sequence, the second image frame being subsequent to the first image frame in the video sequence, using the base layer to encode the second image frame in the target resolution, and indicating in the encoded video stream that the second image frame is decodable in the target resolution using only the base layer.

2. The method of claim 1, wherein a first encoding scenario of the one or more predefined encoding scenarios comprises a continuous shaking of a camera capturing the video sequence.

3. The method of claim 2, wherein detecting an encoding scenario comprises detecting the first encoding scenario by:
receiving sensor data from a gyro of the camera, and determining that the camera is shaking based on an analysis of the sensor data.

4. The method of any one of claims 2-3, wherein detecting an encoding scenario comprises detecting the first encoding scenario by:
analysing motion vectors of the base layer of the encoded first image frame, and determining that the camera is shaking by determining that the motion vectors correspond to a uniform motion of image data of the first image frame compared to image data of a reference encoded image frame used when encoding the first image frame.

5. The method of any one of claims 1-4, wherein a second encoding scenario of the one or more predefined encoding scenarios comprises a ratio of the bitrate of the enhancement layer to the bitrate of the base layer exceeding a threshold ratio or the bitrate of the enhancement layer exceeding a threshold value, wherein detecting an encoding scenario comprises detecting the second encoding scenario by monitoring the bitrate of the enhancement layer of the encoded first image frame.

6. The method of any one of claims 1-5, wherein the portion of image data of the first image frame depicting a region of interest in a scene depicted in the video sequence, wherein a third encoding scenario of the one or more predefined encoding scenarios comprises a persistent motion being present in the region of interest in the scene, wherein detecting an encoding scenario comprises detecting the third encoding scenario by:
analysing motion vectors of the base layer of a plurality of encoded image frames preceding the second encoded image frame in the encoded video stream, and determining that the persistent motion being present in the region of interest in the scene based on the analysis.

7. The method of any one of claims 1-6, wherein encoding the second image frame of the video sequence comprises encoding the base layer of the second image frame as a key frame having the target resolution.

8. The method of any one of claims 1-6, wherein encoding the second image frame of the video sequence comprises encoding the base layer of the second image frame as a switch frame having the target resolution.

9. The method of any one of claims 1-8, wherein indicating in the encoded video stream that the second image frame is decodable in the target resolution using only the base layer comprises at least one of:
encoding an enhancement layer of the second image frame with no image data;
indicating in metadata of the encoded image stream that the second image frame is decodable in the target resolution using only the base layer; and
encoding the base layer of the second image frame as a switch frame.

10. The method of any one of claims 1-9 further comprising:
continuously encoding a plurality of image frames subsequent to the second image frame in the video stream using the base layer to encode each of the plurality of image frames in the target resolution.

11. The method of claim 10, further comprising:
determining that a count of the plurality of image frames exceeds a threshold count;
detecting that none of the encoding scenarios of the set of one or more predefined encoding scenarios is occurring; and
encoding a current image frame of the video sequence using the base layer to encode the current image frame in the first resolution, and using the enhancement layer to encode at least a portion of image data the current image frame to reach the target resolution.

12. The method of any one of claims 1-11, wherein the first image frame is encoded using the Low Complexity Enhancement Video Coding, LCEVC, coding standard.

13. The method of any one of claims 1-12, wherein the base layer of each of the first and second image frames is encoded using one of the following coding standards:
AV1, AV2, and VP9.

14. A non-transitory computer-readable storage medium having stored thereon instructions for implementing the method according to any one of claims 1-13 when executed on a device having processing capabilities.

15. A device for encoding a video sequence into an encoded video stream having a target resolution, wherein the encoded video stream comprises an enhancement layer and a base layer, wherein the device is configured for:
encoding a first image frame of the video sequence using the base layer to encode the image frame in a first resolution being lower than the target resolution, and using the enhancement layer to encode at least a portion of image data the first image frame to reach the target resolution;
detecting an encoding scenario from a set of one or more predefined encoding scenarios; and
encoding a second image frame of the video sequence, the second image frame being subsequent to the first image frame in the video sequence, using the base layer to encode the second image frame in the target resolution, and indicating in the encoded video stream that the second image frame is decodable in the target resolution using only the base layer.

## Amended claims

### Amended claims in accordance with Rule 137(2) EPC.

1. A method for hierarchical video encoding of a video sequence into an encoded video stream having a target resolution, wherein the encoded video stream comprises an enhancement layer and a single base layer, the method comprising:
encoding a first image frame of the video sequence using the base layer to encode the image frame in a first resolution being lower than the target resolution, and using the enhancement layer to encode at least a portion of image data of the first image frame to reach the target resolution, wherein the enhancement layer encodes a residual between image data of the first image frame and the image data encoded in the single base layer, wherein the residual being encoded at the target resolution;
detecting an encoding scenario from a set of one or more predefined encoding scenarios; and
encoding a second image frame of the video sequence, the second image frame being subsequent to the first image frame in the video sequence, using the single base layer to encode the second image frame in the target resolution, and indicating in the encoded video stream that the second image frame is decodable in the target resolution using only the single base layer.

2. The method of claim 1, wherein a first encoding scenario of the one or more predefined encoding scenarios comprises a continuous shaking of a camera capturing the video sequence.

3. The method of claim 2, wherein detecting an encoding scenario comprises detecting the first encoding scenario by:
receiving sensor data from a gyro of the camera, and determining that the camera is shaking based on an analysis of the sensor data.

4. The method of any one of claims 2-3, wherein detecting an encoding scenario comprises detecting the first encoding scenario by:
analysing motion vectors of the single base layer of the encoded first image frame, and determining that the camera is shaking by determining that the motion vectors correspond to a uniform motion of image data of the first image frame compared to image data of a reference encoded image frame used when encoding the first image frame.

5. The method of any one of claims 1-4, wherein a second encoding scenario of the one or more predefined encoding scenarios comprises a ratio of the bitrate of the enhancement layer to the bitrate of the single base layer exceeding a threshold ratio or the bitrate of the enhancement layer exceeding a threshold value, wherein detecting an encoding scenario comprises detecting the second encoding scenario by monitoring the bitrate of the enhancement layer of the encoded first image frame.

6. The method of any one of claims 1-5, wherein the portion of image data of the first image frame depicting a region of interest in a scene depicted in the video sequence, wherein a third encoding scenario of the one or more predefined encoding scenarios comprises a persistent motion being present in the region of interest in the scene, wherein detecting an encoding scenario comprises detecting the third encoding scenario by:
analysing motion vectors of the single base layer of a plurality of encoded image frames preceding the second encoded image frame in the encoded video stream, and determining that the persistent motion being present in the region of interest in the scene based on the analysis.

7. The method of any one of claims 1-6, wherein encoding the second image frame of the video sequence comprises encoding the single base layer of the second image frame as a key frame having the target resolution.

8. The method of any one of claims 1-6, wherein encoding the second image frame of the video sequence comprises encoding the single base layer of the second image frame as a switch frame having the target resolution.

9. The method of any one of claims 1-8, wherein indicating in the encoded video stream that the second image frame is decodable in the target resolution using only the single base layer comprises at least one of:
encoding an enhancement layer of the second image frame with no image data;
indicating in metadata of the encoded image stream that the second image frame is decodable in the target resolution using only the single base layer; and
encoding the single base layer of the second image frame as a switch frame.

10. The method of any one of claims 1-9 further comprising:
continuously encoding a plurality of image frames subsequent to the second image frame in the video stream using the single base layer to encode each of the plurality of image frames in the target resolution.

11. The method of claim 10, further comprising:
determining that a count of the plurality of image frames exceeds a threshold count;
detecting that none of the encoding scenarios of the set of one or more predefined encoding scenarios is occurring; and
encoding a current image frame of the video sequence using the single base layer to encode the current image frame in the first resolution, and using the enhancement layer to encode at least a portion of image data the current image frame to reach the target resolution.

12. The method of any one of claims 1-11, wherein the first image frame is encoded using the Low Complexity Enhancement Video Coding, LCEVC, coding standard.

13. The method of any one of claims 1-12, wherein the single base layer of each of the first and second image frames is encoded using one of the following coding standards:
AV1, AV2, and VP9.

14. A non-transitory computer-readable storage medium having stored thereon instructions for implementing the method according to any one of claims 1-13 when executed on a device having processing capabilities.

15. A device for hierarchical video encoding of a video sequence into an encoded video stream having a target resolution, wherein the encoded video stream comprises an enhancement layer and a single base layer, wherein the device is configured for:
encoding a first image frame of the video sequence using the single base layer to encode the image frame in a first resolution being lower than the target resolution, and using the enhancement layer to encode at least a portion of image data the first image frame to reach the target resolution wherein the enhancement layer encodes a residual between image data of the first image frame and the image data encoded in the single base layer, wherein the residual being encoded at the target resolution;
detecting an encoding scenario from a set of one or more predefined encoding scenarios; and
encoding a second image frame of the video sequence, the second image frame being subsequent to the first image frame in the video sequence, using the single base layer to encode the second image frame in the target resolution, and indicating in the encoded video stream that the second image frame is decodable in the target resolution using only the single base layer.
